# EUROPÄISCHE PATENTSCHRIFT

(11) **EP 0 591 727 B1**
(45) Veröffentlichungstag und Bekanntmachung des Hinweises auf die Patenterteilung: **08.01.1997**
(21) Anmeldenummer: 93114833.2
(22) Anmeldetag: 15.09.1993
(51) Int. Cl.: B62D 21/12, B60R 19/02, B62D 65/00

(54) **Nutzfahrzeug, insbesondere Frontlenker-Lastkraftwagen**
Industrial vehicle, especially lorry with forward-mounted cab
Véhicule utilitaire, en particulier camion avec cabine à l'avant

(30) Priorität: 09.10.1992 DE 4234104
(43) Veröffentlichungstag der Anmeldung: 13.04.1994
(73) Patentinhaber: MAN Nutzfahrzeuge Aktiengesellschaft, 80976 München (DE)
(72) Erfinder: Rieck, Gerhard, Dipl.-Ing., D-81247 München (DE); Mertens, Armin, D-80993 München (DE); Schmolly, Ingo, Dipl.-Ing. (FH), D-85757 Karlsfeld (DE)

(56) Entgegenhaltungen:
- DE-A- 2 039 309
- DE-A- 2 117 414
- DE-A- 2 714 017
- DE-A- 3 312 446
- DE-A- 4 112 372
- FR-A- 2 214 281
- FR-A- 2 308 539
- FR-A- 2 667 839
- US-A- 3 913 934

## Beschreibung

Die Erfindung betrifft einen Lastkraftwagen, insbesondere der Frontlenker-Bauart, mit Merkmalen entsprechend dem Oberbegriff des Anspruches 1.

Ein Lastkraftwagen dieser Art ist aus der FR-A-2 308 539 bekannt. Dort ist ein Fahrgestell vorgesehen, das aus zwei jeweils vorgefertigten und vormontierten Modulen zusammengesetzt ist. Der Rahmen besteht aus zwei über Querträger miteinander verbundenen Längsträgern, die der Lange nach in einzelne jeweils einem Modul zugehörige Abschnitte unterteilt sind. Im Bereich des vorderen Moduls sind vordere Längsträger-Abschnitte gegeben, die mit wenigstens einer Vorderachse verbunden sind und ein Antriebsaggregat sowie ein Fahrerhaus tragen. An diesem vorderen Modul schließt sich kurz nach der Fahrerhaus-Rückwand ein hinterer Modul an, mit Längsträger-Abschnitten, die eine den unterschiedlichsten Einsatzzwecken des Fahrzeuges angepaßte Länge aufweisen können, mit wenigstens einer Hinterachse verbunden sind und diverse Anbauteile tragen. Die Längsträger-Abschnitte des vorderen Moduls weisen endseitig Anschlußorgane auf, über die sie mit den Längsträger-Abschnitten des hinteren Moduls verbindbar sind.

Unabhängig von dieser oder einer anderen bekannten Bauart weisen Lastkraftwagen ein Fahrgestell auf, mit einem Rahmen mit Längsträgern, deren Querschnitts-Höhe je nach zulässigem Gesamtgewicht des Fahrzeuges bis zu 400 mm betragen kann. Bedingt dadurch ist für die Herstellung dieser Rahmen-Längsträger relativ viel Material notwendig. Außerdem tragen diese in der Regel aus Blechpreßteilen bestehenden Rahmen-Längsträger in ganz erheblichem Maße zum Leergewicht des Lastkraftwagen bei. Aufgrund der Festigkeit des Materiales und des Querschnittes der Rahmen-Längsträger sowie der diese verbindenden Querträger ergibt sich eine bestimmte Biegesteifigkeit des Rahmens. Eine erforderliche Rahmen-Biegesteifigkeit kann daher nur durch eine entsprechende Auslegung dieser Komponenten erzielt werden. Außerdem erfolgte die Montage aller anzubauenden Teile/Aggregate, so auch der Hinterachse(n), bisher am Band in der Regel immer erst am komplett vorgefertigten Rahmen.

Es ist daher Aufgabe der Erfindung, einen Lastkraftwagen der gattungsgemäßen Art dahingehend zu verbessern, daß die erforderliche Biegesteifigkeit des Rahmens mit geringerem Gewicht und Materialeinsatz realisierbar und außerdem eine größere Montagefreundlichkeit verbunden mit einer flexiblen Anpassung an unterschiedliche Einsatzzwecke des Fahrzeugs erzielbar ist.

Diese Aufgabe ist erfindungsgemäß bei einem Lastkraftwagen der gattungsgemäßen Art durch die im Kennzeichen des Anspruchs 1 angegebene Konstruktion gelöst.

Vorteilhafte Ausgestaltungen dieser Lösung sind in den Unteransprüchen angegeben.

Bedingt durch die erfindungsgemäße Auflösung jedes der beiden Rahmen-Längsträger in ein oberes und ein unteres Längsträger-Teil ist somit in Verbindung mit den diese verbindenden Querträgern ein Rahmen-Mittelabschnitt darstellbar, mit dem Ergebnis einer sehr hohen Biegesteifigkeit bei gleichzeitig geringerem Gewicht und geringerem Materialeinsatz als bei bekannten Rahmen-Konstruktionen. Die erfindungsgemäße Längsträgeraufteilung kommt mithin nur in jenem Bereich des Lastkraftwagens zur Anwendung, der naturgemäß wegen der An- und Aufbauten und Beladung am stärksten belastet ist. Rahmenbereiche hinter und vor dem Auflösungsbereich erfordern regelmäßig keine solch hohe Biegesteifigkeit und können daher ebenfalls entsprechend leichter, mit weniger Materialeinsatz und konstruktiv günstiger gestaltet werden. Bedingt durch diese Konstruktion im davor gegebenen Bereich kann das aus einem nun in vorteilhafter Weise auch je nach Fahrzeugtyp bzw. Einsatzzweck längen- und breitenvariabel vorzufertigenden Rahmen-Ende mit Hinterachse(n) und sonstigen Anbauteilen bestehende Fahrgestell-Heck komplett als isolierte Baugruppe abseits des normalen Endmontagebandes vormontiert und dann als Modul beigebracht am davor gegebenen Fahrgestell-Abschnitt angesetzt und befestigt werden. Dieses erlaubt eine flexiblere Fertigung und einen Teil-Verzicht auf entsprechend qualifiziertes, bisher für diesen Fahrgestell-Heckabschnitt am Endmontageband notwendiges Personal.

Obschon nicht vergleichbar, sei der Vollständigkeit wegen auf einen aus der DE-A-27 14 017 bekannten Fahrgestellrahmen hingewiesen, der ausschließlich einem Omnibus zugeordnet ist und bei dem unterhalb der Rahmen-Längsträger zur Bildung des Buskofferraumes innerhalb der Bodengruppe weitere Längsträger angeordnet sind, die sich zwischen Vorder - und Hinterachse erstrecken. Auf einen Lastkraftwagen der erfindungsgemäßen Bauart ist eine solche Omnibus-Bodengruppe jedoch nicht zu lesen, weil bei einer solchen üblicherweise andere Herstellungs- und Montagemethoden angewandt werden.

Nachstehend ist die erfindungsgemäße Lösung anhand mehrerer in der Zeichnung dargestellter Ausführungsbeispiele noch näher erläutert. In der Zeichnung zeigen:
- Fig. 1 bis 5: jeweils in schematisierter Seitenansicht einen Lastkraftwagen der Frontlenker-Bauart (ohne Auf- und Anbauten) mit einer Ausführungsform der erfindungsgemäßen Fahrgestell-Konstruktion,
- Fig. 6 bis 9: schematisiert jeweils in Draufsicht eine Ausführungsform des Fahrgestell-Heckbereiches,
- Fig. 10: einen schematisierten Querschnitt durch die Ausführungsform gemäß Fig. 1 und 2 im Bereich des eingebauten Ersatzrades,
- Fig. 11 bis 14: je eine Ausführungsform der Querträger-Verbindungen zwischen den beiden erfindungsgemäß in zwei Teile aufgelösten Längsträger-Abschnitten, und
- Fig. 15 bis 17: je eine Ausführungsform für den Anschluß von Organen für einen seitlichen Unterfahrschutz am erfindungsgemäß in zwei Teile aufgelösten Längsträger-Abschnitt.

In den Figuren sind gleiche bzw. einander entsprechende Bauteile mit gleichen Bezugszeichen angezogen.

Bei dem Lastkraftwagen kann es sich um einen Lastkraftwagen jeglicher Bau- und Einsatzart handeln. Die Basis bildet somit ein Lastkraftwagen der Frontlenker- oder Hauber-Bauart, auf dessen Fahrgestell je nach Einsatzzweck die entsprechenden Auf- und/oder Anbauten angebracht sind.

Der Lastkraftwagen weist ein Fahrgestell auf, dessen Rahmen 1 aus zwei bauartgleichen, über Querträger miteinander verbundenen Längsträgern 2, 3 besteht. Vom Rahmen 1 werden in dessen vorderem Bereich ein Antriebsaggregat 4 - eingebaut zwischen beiden Längsträgern 2, 3 - und ein Fahrerhaus 5 - letzteres über Lagerböcke 6, 7 - getragen.

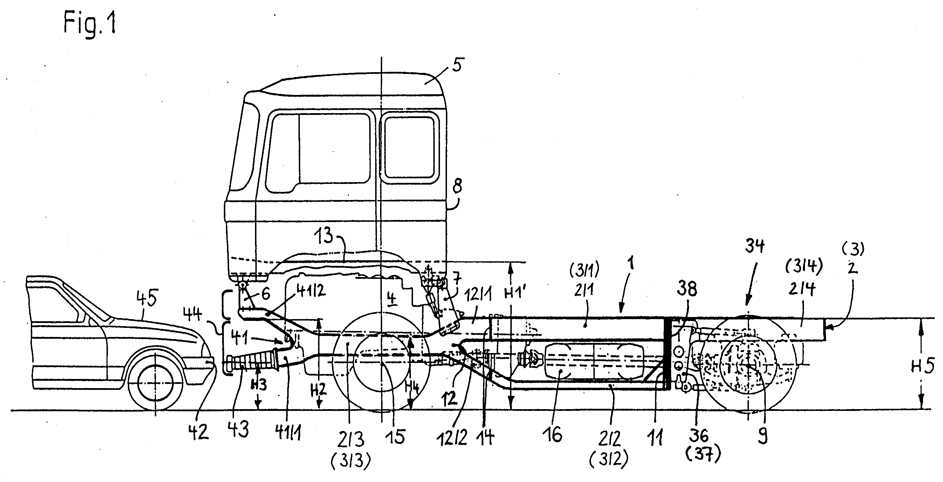

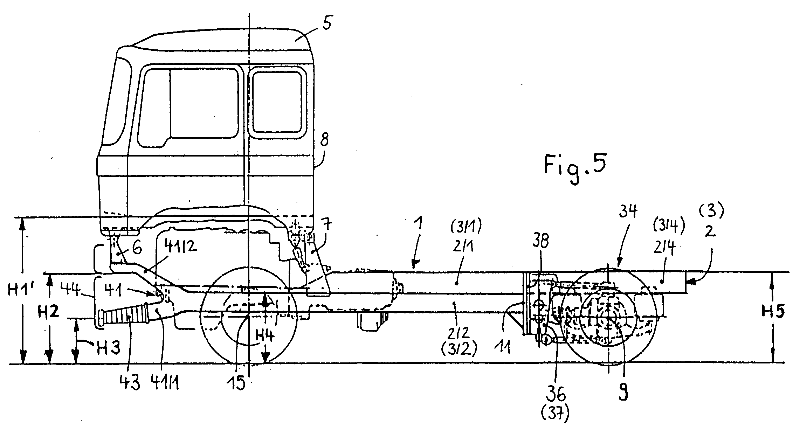

Dem erfindungsgemäßen Rahmen-Konzept entsprechend ist jeder der beiden Rahmen-Längsträger 2, 3 etwa ab der Fahrerhaus-Rückwand 8 in ein oberes Längsträger-Teil 2/1, 3/1 und ein unteres Längsträger-Teil 2/2, 3/2 aufgelöst, die sich nach hinten jeweils nur bis vor die (erste, vordere) Hinterachse 9 erstrecken und an ihrem hinteren Ende entweder Anschlußflansche 10 (Fig. 5, 7 und 8) aufweisen oder über eine Vertikaltraverse 11 (Fig. 1, 2, 3, 5, 6, 9) miteinander verbunden sind.

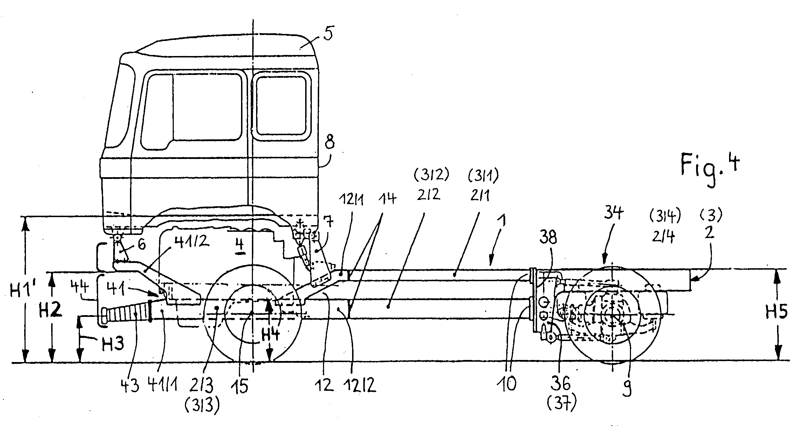

Bei den Ausführungsformen gemäß Fig. 1 bis 4 weist jeder der beiden Rahmen-Längsträger 2, 3 am hinteren Ende eines vorderen Träger-Abschnittes 2/3 bzw. 3/3 eine Vertikal-Gabelung 12 mit oberem Gabel-Teil 12/1, an dem sich das obere Längsträger-Teil 2/1 bzw. 3/1 anschließt, und unterem Gabel-Teil 12/2, an dem sich das untere Längsträger-Teil 2/2 bzw. 3/2 anschließt, auf. Der vordere Längsträger-Abschnitt 2/3 bzw. 3/3 jedes Längsträgers 2, 3 ist dabei um ein gewisses Maß zumindest partiell abgesenkt, um eine Tieferlegung des Antriebsaggregates 4 und gegebenenfalls auch des Fahrerhauses 5 zu ermöglichen. Zum Vergleich: Das Maß des Abstandes zwischen Fahrbahn und Oberkante oberes Längsträger-Teil 2/1 bzw. 3/1 ist in der Zeichnung mit H5 angegeben. Demgegenüber ist das Maß zwischen Fahrbahn und Oberkante des abgesenkten vorderen Träger-Abschnittes 2/3 bzw. 3/3, welches in der Zeichnung mit H4 angegeben ist, kleiner und beträgt etwa 0,6 - 0,9 H5. Das Maß zwischen Fahrbahn und Boden 10 des tiefer gelegten Fahrerhauses 5 ist in den Fig. 1 bis 5 mit H1' angegeben. Im übrigen können die vorderen abgesenkten Längsträger-Abschnitte 2/3, 3/3 zur Bildung eines etwa V-förmigen Einbaubereiches für das Antriebsaggregat 4 auch in sich von der Vertikalen abweichend schräg gestellt sowie zum direkten Anschluß von Achs- bzw. Einzelradaufhängungsorganen mit entsprechenden Aus- und Einbuchtungen versehen sein.

Die beiden Teile 2/1, 2/2 bzw. 3/1, 3/2 jedes Rahmen-Längsträgers 2, 3 sind bei den Ausführungsbeispielen gemäß Fig. 1 bis 4 mit größerem Abstand übereinander und in Längsrichtung im wesentlichen parallel verlaufend angeordnet. Außerdem ist dabei jedes der beiden Teile 2/1, 2/2 bzw. 3/1, 3/2 eines Rahmen-Längsträgers 2, 3 mit dem zugehörigen Gabel-Teil 9/1 bzw. 9/2 über Schraub- oder Nietverbindungen verbunden. Die jeweiligen Schnitt- bzw. Anschlußstellen sind in der Zeichnung mit 14 angezogen. Dies hat den Vorteil, daß das Fahrzeug aus drei vormontierten Modulen zusammensetzbar wäre, nämlich einem ersten Modul, bestehend aus Fahrgestell-Vorderteil, Vorderachse(n) 15, Antriebsaggregat 4, Fahrerhaus 5, und sonstigen Anbauteilen, einem zweiten Modul, bestehend aus Fahrgestell-Mittelabschnitt mit den erfindungsgemäß in zwei Teile aufgelösten Längsträger-Abschnitten sowie Kraftstoff-/ Druckluftbehältern, Staukästen, Batteriekästen und dergleichen Anbauteilen, sowie einem dritten Modul, bestehend aus dem Fahrgestell-Heck 16 mit Rahmen-Ende, Hinterachse(n) 9 und sonstigen Anbauteilen. Sofern eine Aufteilung in nur zwei Module gewünscht wird, können die beiden Teile 2/1, 2/2 bzw. 3/1, 3/2 jedes Rahmen-Längsträgers 2, 3 am zugehörigen Gabel-Teil 12/1 bzw. 12/2 auch angeschweißt sein.

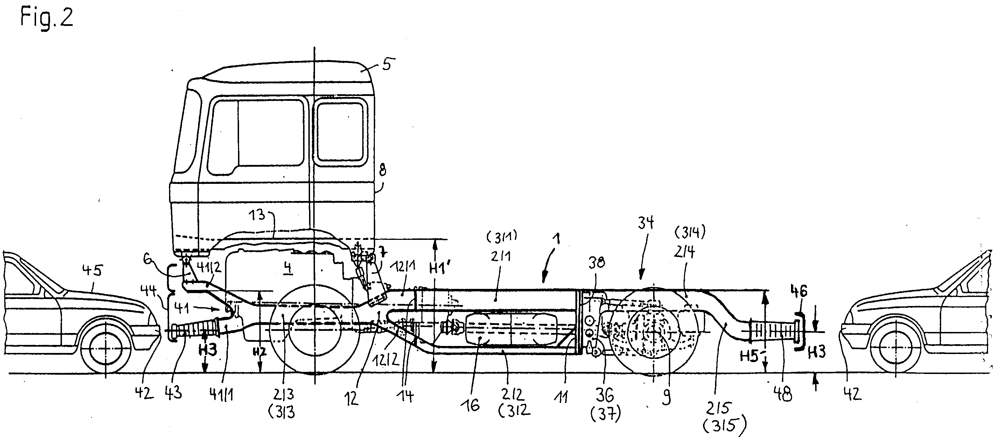

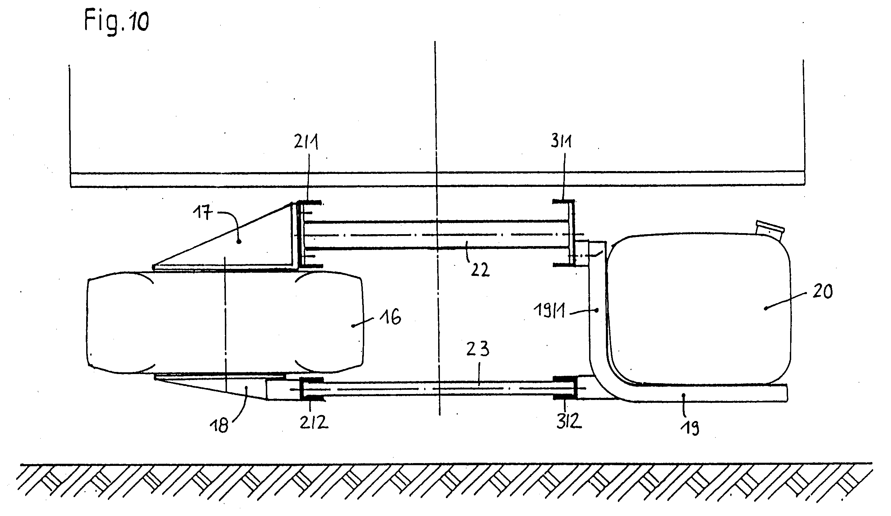

Bei den aus Fig. 1 und 2 ersichtlichen Ausführungsbeispielen ist das untere Teil 2/2 bzw. 3/2 eines der Rahmen-Längsträger 2, 3 soweit nach unten verlegt, daß zwischen diesem und dem zugehörigen oberen Längsträger-Teil 2/1 bzw. 3/1 ein Ersatzrad 16 quer einbaubar ist. Dieses wird - wie aus dem Schnitt gemäß Fig. 10 ersichtlich - von wenigstens einer, außen an einem der Längsträger-Teile angeflanschten Konsole 17, 18 getragen, die mit einem Schlitten zum Quereinschieben und -ausziehen sowie das Heben und Absenken bzw. Montieren und Demontieren des Ersatzrades 16 unterstützenden Mechanismen ausgestattet sein kann.

Wie aus Fig. 10 ebenfalls ersichtlich, sind an den beiden Teilen 2/1, 2/2 bzw. 3/1, 3/2 eines Rahmen-Längsträgers 2 bzw. 3 außen Winkelhalter 19 mit ihren Vertikal-Schenkeln 19/1 sehr günstig abgestützt angebracht, vorzugsweise angeschraubt, die als Träger für Fahrzeugteile 20 wie Kraftstoff- und/oder Druckluftbehälter, Staukästen, Batteriekästen und dergleichen dienen.

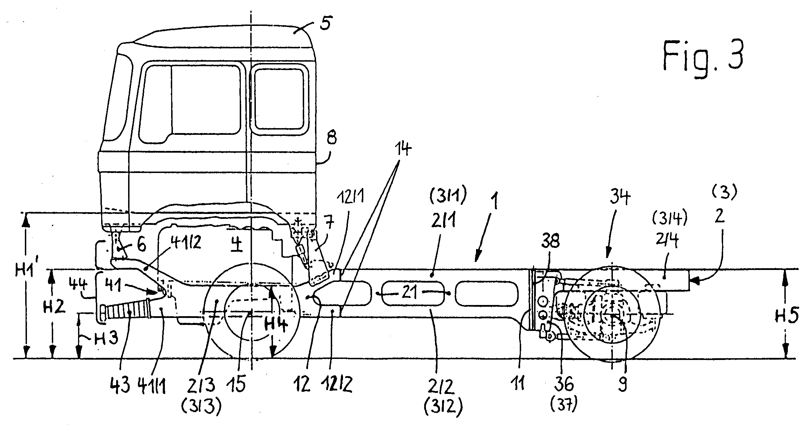

Zur Erhöhung der Biegesteifigkeit können die beiden Teile 2/1, 2/2 bzw. 3/1, 3/2 der Rahmen-Längsträger 2, 3 auch noch durch wenigstens eine Strebe 21 miteinander verbunden sein, was beispielhaft in Fig. 3 dargestellt ist. In diesem Fall sind die beiden Teile 2/1, 2/2 bzw. 3/1, 3/2 jeweils zusammen mit den Streben 21 als einstückiges Blechpreßteil realisiert. Alternativ hierzu wäre jedoch eine Schweißkonstruktion aus einzeln vorgefertigten Teilen möglich.

In Fig. 5 ist eine von den vorbeschriebenen Ausführungsbeispielen insofern abweichende Variante dargestellt, als sich das untere Teil 2/2, 3/2 jedes Rahmen-Längsträgers 2, 3 mit ebener Oberkante auf niedrigem Höhen-Niveau H4 nach vorne bis unter das Fahrerhaus 5 und nach hinten bis vor die (erste, vordere) Hinterachse 12 erstreckt, dagegen unmittelbar oder nur mit geringem Abstand darüber auf höherem Niveau (Maß Fahrbahn bis Rahmen-Oberkante = H5) etwa ab der Fahrerhaus-Rückwand 8 das obere Teil 2/1, 3/1 des Rahmen-Längsträgers 2, 3 verläuft und hinten in gleicher Vertikalquerebene wie das zugehörige obere Trägerteil 2/1, 3/1 endet. Beide Längsträger-Teile 2/1, 2/2 bzw. 3/1, 3/2 sind an geeigneten Stellen über Schraub-, Niet-, oder Schweißverbindungen miteinander verbunden.

Unabhängig von ihrer jeweiligen Anordnung können die beiden Teile 2/1, 2/2 bzw. 3/1, 3/2 jedes Rahmen-Längsträgers 2, 3 entweder einen gleichen Querschnitt oder unterschiedliche Querschnitte aufweisen, wobei das querschnittsstärkere wahlweise das untere oder obere sein kann.

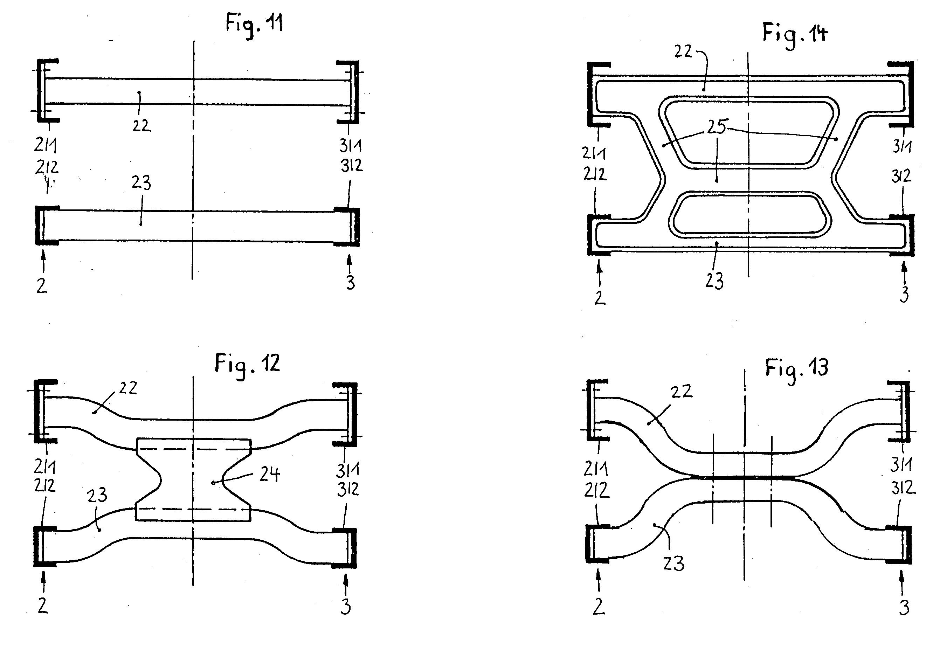

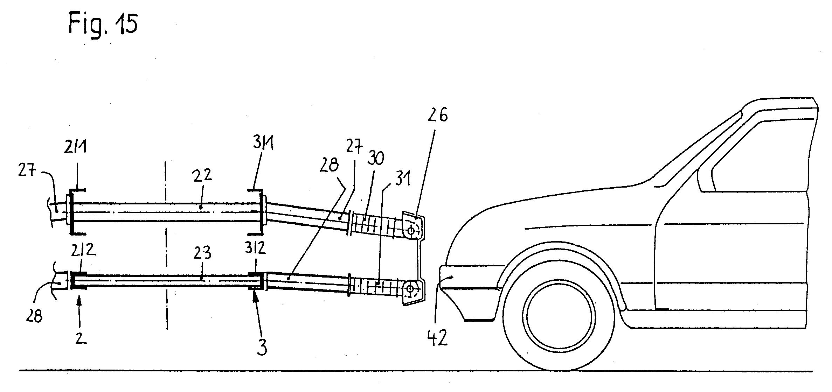

Die beiden Längsträger 2, 3 sind generell über an geeigneten Stellen angebrachte Querträger miteinander verbunden. Die Fig. 11 bis 14 zeigen verschiedene Querträger-Konstruktionen für jenen Bereich auf, in dem die Längsträger 2, 3 in jeweils zwei Teile aufgelöst sind. Dabei können zur Verbindung der jeweils oberen Längsträger-Teile 2/1, 3/1 und unteren Längsträger-Teile 2/2, 3/2 gerade oder gekröpfte, gegebenenfalls endseitig mit Anschlußflanschen bestückte Querträger 22, 23 vorgesehen sein, die nicht (siehe Fig. 11) oder über ein Zwischenstück 24 (siehe Fig. 12) oder mittig direkt aneinander anliegend (Fig. 13) miteinander verbunden sind und an denen die besagten Längsträger-Teile jeweils endseitig angeschraubt, angenietet oder angeschweißt sind. Bei der Ausführungsform gemäß Fig. 14 sind die Querträger 22, 23 zusammen mit diese verbindenden Verstrebungen 25 durch ein Blechpreßteil realisiert, an das die besagten Längsträger-Teile entweder angeschraubt, angenietet oder angeschweißt sind.

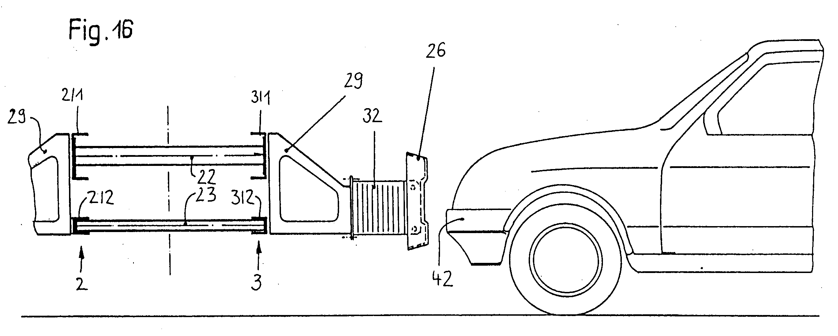

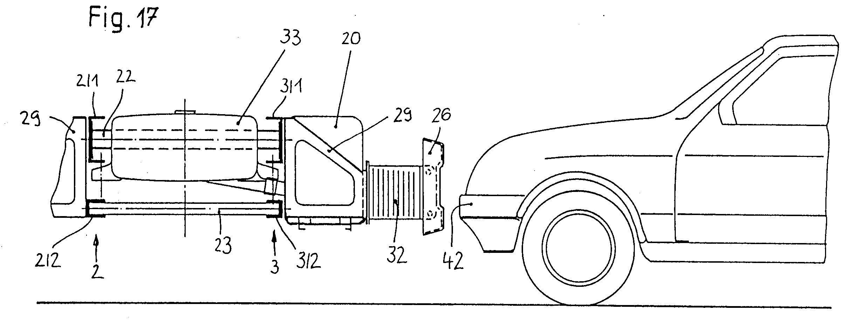

Die erfindungsgemäße Auflösung der beiden Rahmen-Längsträger 2, 3 eignet sich besonders gut für eine äußerst günstige Anordnung und Abstützung von dem seitlichen Unterfahrschutz dienenden Organen. Hierzu sind verschiedene Ausführungsbeispiele in den Fig. 15 bis 17 dargestellt. Dabei sind an beiden Teilen 2/1, 2/2 bzw. 3/1, 3/2 der beiden Rahmen-Längsträger 2, 3 seitliche Unterfahrschutzschilde 26 tragende Halter 27, 28 (Fig. 15) bzw. 29 (Fig. 16, 17) angebracht. In einer besonders sicheren Ausführungsform sind dabei die seitlichen Unterfahrschutzschilde 26 über quer nachgiebige Energieabsorber 30, 31 (Fig. 15) bzw. 32 (Fig. 16, 17) an den Haltern 27, 28 bzw. 29 abgestützt. Dadurch ist ein Seitenaufprall eines Pkw, wie in den Fig. 15 bis 17 dargestellt, besonders günstig, weil energieverzehrend, abfangbar. Durch eine entsprechende Ausgestaltung der Halter 27, 28, 29 mit einer seitlich auskragenden Länge, die größer die ebenfalls seitlich an den Längsträger-Teilen befestigten Fahrzeugteile 20 wie Kraftstoff- und/oder Druckluftbehälter, Batteriekästen, Staukästen und dergleichen ist, sind letztere bei einem seitlichen Aufprall eines Personenkraftwagens auch relativ gut gegen etwaige Beschädigungen gesichert.

Im übrigen macht die Zweiteilung der beiden Längsträger 2, 3, wie ebenfalls aus Fig. 17 ersichtlich, eine besonders geschützte Unterbringung von Fahrzeugteilen 33 wie Batteriekästen, zusätzlichen Kraftstoff- und/oder Druckluftbehältern im Bereich zwischen beiden zweigeteilten Längsträgern 2, 3 möglich.

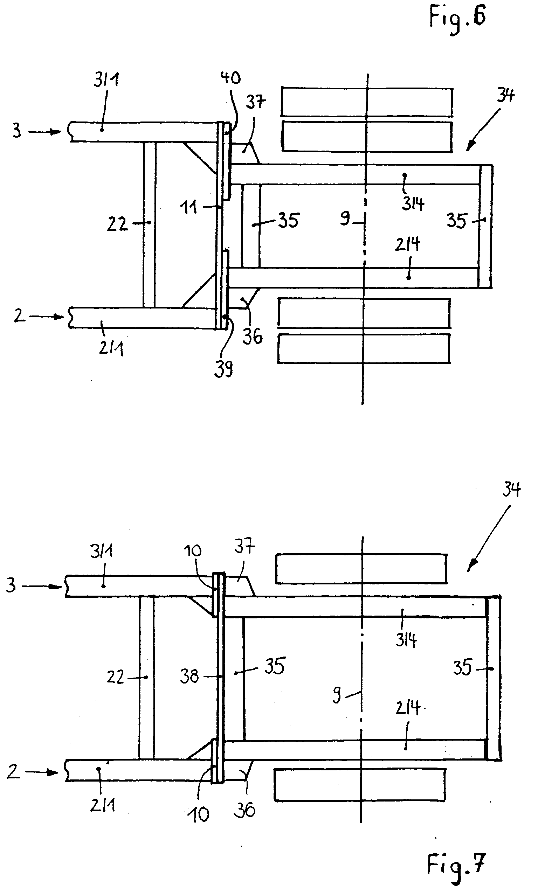

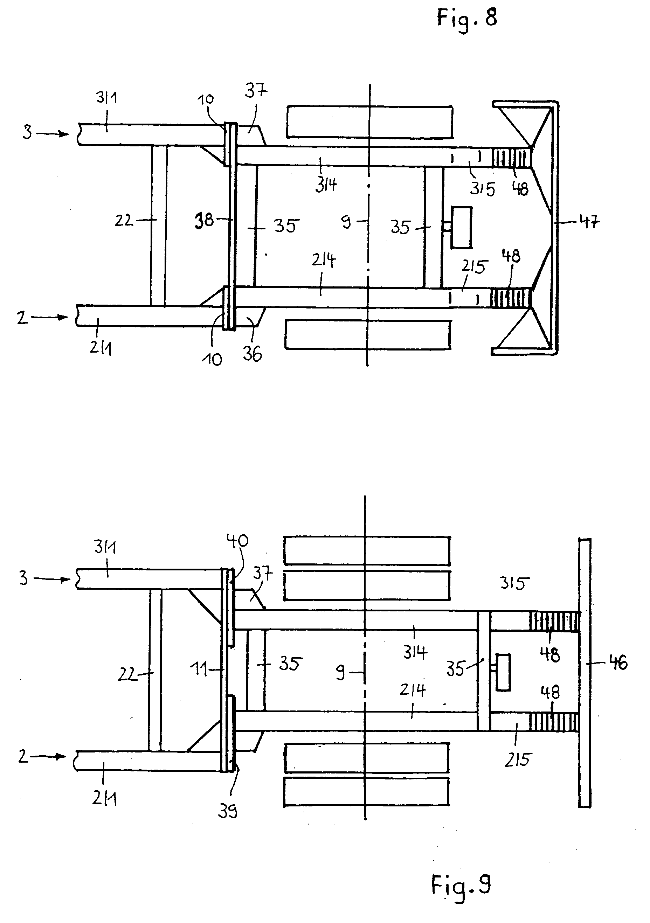

Grundsätzlich ist das Fahrgestell-Heck 34 entsprechend einem weiteren Merkmal der Erfindung als vormontierbarer Modul ausgebildet. Dabei ist der Rahmen 1 nach hinten durch sich an den oberen Längsträger-Teilen 2/1, 3/1 in deren Höhe anschließende, durch wenigstens einen Querträger 35 (siehe Fig. 6 bis 9) verbundene Längsträger-Teile 2/4 bzw. 3/4 ergänzt. Für die Anlenkung von Hinterachsaufhängungsorganen sind dabei außen an den Längsträger-Teilen 2/4, 3/4 jeweils Lagerschilde 36, 37 vorgesehen. Frontseitig der letzteren sowie der Längsträger-Teile 2/4, 3/4 ist verbunden mit diesen Teilen eine Anschlußplatte 38 (siehe Fig. 1 bis 5, 7 und 8) oder sind Anschlußflansche 39, 40 (siehe Fig. 6 und 9) gegeben, die bei der End-Montage des vormontierten Fahrgestell-Hecks 34 an den endseitig der Längsträgerteile 2/1, 2/2, 3/1, 3/2 gegebenen Anschlußorganen 10 bzw. 11 zur Anlage kommt bzw. kommen und dort über Schraub- oder Nietverbindungen befestigt wird/werden. Wie aus einem Vergleich von Fig. 6 mit Fig. 7 oder Fig. 8 mit Fig. 9 ersichtlich, läßt diese Bauart des Fahrgestell-Hecks 34 auch eine beliebige Breiten- und Längenvariation des dortigen Rahmenendes zu, was eine bestmögliche Anpassung an die unterschiedlichsten Lastkraftwagentypen und -einsatzzwecke oder unterschiedliche Achsen bzw. unterschiedliche Rad-/Radsatz-Abstände ermöglicht. Zum Vergleich: Das Rahmenende gemäß Fig. 6 ist schmäler und kürzer als jenes gemäß Fig. 7, während das Rahmenende gemäß Fig. 9 schmäler und länger als jenes gemaß Fig. 8 ist.

Darüber hinaus eignet sich diese Bauart des Fahrgestell-Hecks 34 auch besonders gut für eine Ausgestaltung des Lastkraftwagen-Hecks mit einer Knautschzone ähnlich der seitlich gegebenen. Dies ist aus Fig. 2 in Verbindung mit Fig. 8 oder 9 ersichtlich. Dabei sind die hinteren Enden 2/5, 3/5 der hinteren Längsträger-Abschnitte 2/4, 3/4 bis auf Höhe H3 einer Pkw-Stoßstange (siehe Fig. 2) nach unten gezogen, durch Abkröpfen (siehe Fig. 2 und 8) oder Anschweißen (siehe Fig. 9) entsprechender Träger-Teile. Eine Rammschutzleiste 46 (siehe Fig. 2 und 9) oder eine das Heck aerodynamisch umgebende Verkleidungsblende 47 (siehe Fig. 8) sind dabei über wenigstens einen in Längsrichtung nachgiebigen, in Höhe H3 der Pkw-Stoßstange angeordneten Energieabsorber 48 an den hinteren Enden der heruntergezogenen Längsträger-Abschnitte 2/5, 3/5 abgestützt. Bei einem Aufprall eines Pkw kann dieser somit in diese konstruktiv vorgegebene hintere Lastkraftwagen-Knautschzone eindringen, wobei die Aufprall-Energie durch den/die Energieabsorber 48 verzehrt wird.

Unabhängig von der Gestaltung des Fahrgestells im hinteren Bereich kann der Lastkraftwagen auch vorderseitig mit einer Knautschzone ausgestattet sein. Hierfür kann jeder der Rahmen-Längsträger 2, 3 an seinem vorderen Endbereich eine Vertikal-Gabelung 41 aufweisen (siehe Fig. 1 bis 5), an deren unterem Gabel-Teil 41/1 vorne über einen oder mehrere in Höhe H3 einer Pkw-Stoßstange 42 (siehe Fig. 1 und 2) angeordnete(n) Energieabsorber 43 ein Stoßfänger 44 abgestützt ist. Das obere Gabel-Teil 41/2 dagegen endet in einer etwas über dem Normal-Niveau einer Pkw-Motorhaube 45 gegebenen Höhe H2 und ist untenseitig so gestaltet, daß ein Pkw bei einer Frontalkollision in diese so gegebene, im übrigen bauteil- bzw. aggregatfreie oder zumindest bauteil- bzw. aggregatarme und dann nur mit längsweich (in Längsrichtung nachgiebig) am Rahmen 1 befestigten Bauteilen bzw. Aggregaten ausgestattete Lastkraftwagen-Knautschzone eindringen kann, wobei durch den/die in Rahmen-Längsrichtung nachgiebigen Energieabsorber 43 die Energie verzehrbar ist.

## Patentansprüche

1. Lastkraftwagen, insbesondere der Frontlenker-Bauart, mit einem aus vorgefertigten, vormontierten Modulen zusammengesetzten Fahrgestell, dessen Rahmen (1) aus zwei über Querträger (22, 23) verbundenen Längsträgern (2, 3) besteht, deren im Bereich eines vorderen Moduls gegebene Längsträger-Abschnitte (2/3, 3/3) mit wenigstens einer Vorderachse (15) verbunden sind und ein Antriebsaggregat (4) sowie ein Fahrerhaus (5) tragen, und deren im Bereich eines hinteren Moduls bzw. eines Fahrgestell-Hecks (34) gegebene Längsträger-Abschnitte (2/4, 3/4) eine dem jeweiligen Fahrzeugeinsatzzweck entsprechend angepaßte unterschiedliche Länge aufweisen können, ferner mit wenigstens einer Hinterachse (9) verbunden sind, außerdem diverse Anbauteile tragen und am hinteren Ende des davor gegebenen Rahmenabschnittes über entsprechende Anschlußorgane (10 bzw. 11) angeschlossen sind, dadurch gekennzeichnet, daß
a) jeder der beiden Rahmen-Längsträger (2, 3) etwa ab der Fahrerhaus-Rückwand (8) in ein oberes Längsträger-Teil (2/1, 3/1) und ein unteres Längsträger-Teil (2/2 bzw. 3/2) aufgelöst ist, die sich nach hinten jeweils nur bis vor die (erste, vordere) Hinterachse (9) erstrecken und dort endseitig als Anschlußorgane für die Befestigung des Fahrgestell-Hecks (34) Flansche (10) aufweisen oder mit einer Vertikaltraverse (11) verbunden sind,
b) das Fahrgestell-Heck (34) durch einen Modul gebildet ist, innerhalb welchem das Rahmen-Ende dem jeweiligen Fahrzeugeinsatzzweck entsprechend sowohl durch Variierung der Länge als auch der Breite angepaßt ist,
c) das Fahrgestell-Heck (34) Längsträger-Abschnitte (2/4, 3/4) mit vorne angeordneten plattenförmigen Anschlußorganen (38 bzw. 39, 40) aufweist, über die es an den Anschlußorganen (10, 11) des davor gegebenen Fahrgestell-Abschnittes abgestützt angeschlossen ist.

2. Lastkraftwagen nach Anspruch 1, dadurch gekennzeichnet, daß jeder der beiden Rahmen-Längsträger (2, 3) am hinteren Ende eines vorderen Träger-Abschnittes (2/3, 3/3) eine Vertikalgabelung (12) mit oberem Gabelteil (12/1), an dem sich das obere Längsträger-Teil (2/1 bzw. 3/1) anschließt, und unterem Gabelteil (12/2), an dem sich das untere Längsträger-Teil (2/2 bzw. 3/2) anschließt, aufweist.

3. Lastkraftwagen nach Anspruch 2, dadurch gekennzeichnet, daß die Vertikalgabelung (12) jeweils am hinteren Ende eines vorderen Längsträger-Abschnittes (2/3, 3/3) gegeben ist, die zur Tieferlegung des Antriebsaggregates (4) und gegebenenfalls auch des Fahrerhauses (5) zumindest partiell auf ein gegenüber dem Höhen-Niveau (H5) des oberen Längsträger-Teils (2/1, 3/1) niedrigeres Höhen-Niveau (H4 = ca. 0,6 - 0,9 H5) abgesenkt und gegebenenfalls zur Bildung eines etwa V-förmigen Antriebsaggregat-Einbaubereiches in sich von der Vertikalen abweichend schräg gestellt sowie zum direkten Anschluß von Achsanlenkungs- bzw. Einzelradaufhängungsorganen mit entsprechenden Aus- und Einbuchtungen versehen sind.

4. Lastkraftwagen nach Anspruch 2, dadurch gekennzeichnet, daß die beiden Teile (2/1, 2/2 bzw. 3/1, 3/2) jedes Rahmen-Längsträgers (2, 3) in einer Vertikalebene mit Abstand übereinander und in Längsrichtung im wesentlichen parallel verlaufend angeordnet sind.

5. Lastkraftwagen nach Anspruch 2, dadurch gekennzeichnet, daß jedes der beiden Teile (2/1, 2/2 bzw. 3/1, 3/2) eines Rahmen-Längsträgers (2, 3) mit dem zugehörigem Gabelteil (12/1, 12/2) über Schraub- oder Nietverbindungen verbunden ist.

6. Lastkraftwagen nach einem der Ansprüche 2 und 3, dadurch gekennzeichnet, daß jeder Rahmen-Längsträger (2, 3) einschließlich seiner beiden Teile (2/1, 2/2 bzw. 3/1, 3/2) durch eine aus mehreren vorgefertigten Einzelteilen zusammengesetzte Schweiß-Konstruktion realisiert ist.

7. Lastkraftwagen nach einem oder mehreren der vorhergehenden Ansprüche, dadurch gekennzeichnet, daß die beiden Teile (2/1, 2/2 bzw. 3/1, 3/2) jedes Rahmen-Längsträgers (2, 3) an ihrem hinteren Ende über eine Vertikaltraverse (11) miteinander verbunden sind.

8. Lastkraftwagen nach einem oder mehreren der Ansprüche 1 bis 7, dadurch gekennzeichnet, daß das untere Teil (2/2, 3/2) eines der beiden Rahmen-Längsträger (2, 3) soweit nach unten verlegt ist, daß zwischen diesem und dem zugehörigen oberen Längsträger-Teil (2/1, 3/1) ein Ersatzrad (16) quer einbaubar ist.

9. Lastkraftwagen nach einem oder mehreren der Ansprüche 1 bis 7, dadurch gekennzeichnet, daß die beiden Teile (2/1, 2/2 bzw. 3/1, 3/2) eines Rahmen-Längsträgers (2, 3) durch wenigstens eine versteifende Strebe (21) miteinander verbunden sind.

10. Lastkraftwagen nach Anspruch 9, dadurch gekennzeichnet, daß die beiden Teile (2/1, 2/2 bzw. 3/1, 3/2) eines Rahmen-Längsträgers (2, 3) einschließlich der Strebe(n) (21) als einstückiges Blechpreßteil realisiert sind.

11. Lastkraftwagen nach Anspruch 3, dadurch gekennzeichnet, daß sich das untere Teil (2/2, 3/2) jedes Rahmen-Längsträgers (2, 3) mit ebener Oberkante auf abgesenktem Höhen-Niveau (H4) von unterhalb des Fahrerhauses (5) nach hinten bis vor die (erste, vordere) Hinterachse (9) erstreckt und unmittelbar oder mit geringem Abstand darüber auf höherem Niveau (H5) das im Bereich der Fahrerhaus-Rückwand (8) beginnende sowie in der gleichen Vertikalquerebene wie das zugehörige untere Teil (21/2, 3/2) endende obere Teil (2/1, 3/1) des Rahmen-Längsträgers (2, 3) verläuft.

12. Lastkraftwagen nach einem oder mehreren der vorhergehenden Ansprüche, dadurch gekennzeichnet, daß am Fahrgestell-Heck (34) frontseitig der dem hinteren Rahmenende zugehörigen Teile (2/4, 3/4) eine Anschlußplatte (38) oder Anschlußflansche (39, 40) gegeben ist bzw. sind, über die das vormontierte Fahrgestell-Heck (16) am Ende der Längsträger-Teile (2/1, 2/2; 3/1, 3/2), dort an der Vertikaltraverse (11) oder Anschlußflanschen (10) anschließbar ist.

13. Lastkraftwagen nach Anspruch 1, dadurch gekennzeichnet, daß die beiden Teile (2/1, 2/2 bzw. 3/1, 3/2) jedes Rahmen-Längsträgers (2, 3) unterschiedliche Querschnitte aufweisen.

14. Lastkraftwagen nach Anspruch 1, dadurch gekennzeichnet, daß das querschnittsstärkere Teil (2/1, 2/2 bzw. 3/1, 3/2) jedes Rahmen-Längsträgers (2, 3) wahlweise das untere oder obere ist.

15. Lastkraftwagen nach Anspruch 1, dadurch gekennzeichnet, daß beide Teile (2/1, 2/2 bzw. 3/1, 3/2) eines Rahmen-Längsträgers (2, 3) den gleichen Querschnitt haben.

16. Lastkraftwagen nach einem oder mehreren der vorhergehenden Ansprüche, dadurch gekennzeichnet, daß die jeweils oberen Teile (2/1, 3/1) und die jeweils unteren Teile (2/2, 3/2) der beiden Rahmen-Längsträger (2, 3) jeweils über wenigstens einen, vorzugsweise jedoch mehrere Querträger (22, 23) miteinander verbunden sind.

17. Lastkraftwagen nach Anspruch 16, dadurch gekennzeichnet, daß zwei jeweils übereinander angeordnete Querträger (22, 23) mittig direkt oder über ein Zwischenstück (24) miteinander verbunden sind.

18. Lastkraftwagen nach Anspruch 16, dadurch gekennzeichnet, daß zwei jeweils übereinander angeordnete Querträger (22, 23) zusammen mit diese verbindenden Verstrebungen (25) durch ein Blechpreßteil realisiert sind.

19. Lastkraftwagen nach einem oder mehreren der Ansprüche 1 bis 10, dadurch gekennzeichnet, daß an beiden Teilen (2/1, 2/2 bzw. 3/1, 3/2) eines Rahmen-Längsträgers (2, 3) außen Winkelhalter (19) mit ihren Vertikalschenkeln (19/1) angebracht, vorzugsweise angeschraubt sind, die als Träger für Fahrzeugteile (20) wie Kraftstoff- und/oder Druckluftbehälter, Batteriekästen, Staukästen und dergleichen dienen.

20. Lastkraftwagen nach einem oder mehreren der Ansprüche 1 bis 10, dadurch gekennzeichnet, daß an beiden Teilen (2/1, 2/2 bzw. 3/1, 3/2) der Rahmen-Längsträger (2, 3) seitliche Unterfahrschutzschilde (26) tragende Halter (27, 28, 29) angebracht sind.

21. Lastkraftwagen nach Anspruch 20, dadurch gekennzeichnet, daß die seitlichen Unterfahrschutzschilde (26) über quer nachgiebige Energieabsorber (30, 31, 32) an den Haltern (27, 28, 29) abgestützt sind.

22. Lastkraftwagen nach einem der vorhergehenden Ansprüche, dadurch gekennzeichnet, daß die im Fahrgestell-Heck-Modul (34) gegebenen Längsträger-Abschnitte (2/4, 3/4) bis auf Höhe (H3) einer Pkw-Stoßstange nach unten gezogen sind, und daß eine Rammschutzleiste (49) oder eine das Heck aerodynamisch umgebende Verkleidungsblende (47) über wenigstens einen in Längsrichtung nachgiebigen Energieabsorber (48) an den hinteren Enden der heruntergezogenen Längsträger-Abschnitte (2/5, 3/5) abgestützt ist, somit bei einem Aufprall eines Pkw dieser in die solchermaßen gestaltete hintere Lastkraftwagen-Knautschzone eindringen kann und dabei durch den/die Energieabsorber (48) die Aufprall-Energie verzehrbar ist.

## Claims

1. A heavy goods vehicle, in particular of the forward control type of construction, with a chassis which is built from prefabricated, pre-assembled modules and whose frame (1) consists of two longitudinal beams (2, 3) which are connected by means of cross-beams (22, 23) and whose longitudinal beam portions (2/3, 3/3) provided in the region of a forward module are connected to at least one front axle (15) and support a drive unit (4) and a cab (5), and whose longitudinal beam portions (2/4, 3/4) provided in the region of a rearward module or a tail end (34) of the chassis may be of differing length according to the respective end use of the vehicle, these being furthermore connected to at least one rear axle (9), also supporting various add-on parts and adjoining the rear end of the frame section provided forward thereof by means of appropriate connecting members (10 and 11 respectively), characterised in that
a) each of the two longitudinal frame beams (2, 3) is divided, from approximately the rear wall of the cab (8), into an upper longitudinal beam portion (2/1, 3/1) and a lower longitudinal beam portion (2/2 and 3/2 respectively) which extend rearwards in each case only to forward of the (first, forward) rear axle (9) and there have flanges (10) on their end faces as connecting members for securing the tail end (34) of the chassis or are connected to a vertical cross-arm (11),
b) the tail end (34) of the chassis is formed by a module within which the frame end is adapted to the respective end use of the vehicle by varying both the length and the breadth,
c) the tail end (34) of the chassis has longitudinal beam portions (2/4, 3/4) with forward-positioned plate-like connecting members (38 and 39, 40 respectively) by means of which it is supportingly connected to the connecting members (10, 11) of the chassis portion provided forward thereof.

2. A heavy goods vehicle as claimed in claim 1, characterised in that each of the two longitudinal frame beams (2, 3) has, at the rear end of a forward beam portion (2/3, 3/3), a vertical bifurcation (12) with an upper fork portion (12/1) which the upper longitudinal beam portion (2/1 and 3/1 respectively) adjoins, and a lower fork portion (12/2) which the lower longitudinal beam portion (2/2 and 3/2 respectively) adjoins.

3. A heavy goods vehicle as claimed in claim 2, characterised in that the vertical bifurcation (12) is in each case provided at the rear end of a forward longitudinal beam portion (2/3, 3/3) which, for the purposes of lowering the drive unit (4) and possibly also the cab (5), is lowered at least partially to a lower height level (H4 = approx 0.6 - 0.9 of H5) than the height level (H5) of the upper longitudinal beam portion (2/1, 3/1), may be inclined inherently away from the vertical to form an approximately V-shaped drive unit mounting area, and is provided with appropriate convexities and concavities for the direct connection of axle coupling and/or single-wheel suspension members.

4. A heavy goods vehicle as claimed in claim 2, characterised in that the two portions (2/1, 2/2 and 3/1, 3/2 respectively) of each longitudinal frame beam (2, 3) are positioned in a vertical plane at a distance above each other and in a longitudinal direction substantially parallel to each other.

5. A heavy goods vehicle as claimed in claim 2, characterised in that each of the two portions (2/1, 2/2 and 3/1, 3/2 respectively) of a longitudinal frame beam (2, 3) is connected to the associated fork portion (12/1, 12/2) by means of screw or rivet connections.

6. A heavy goods vehicle as claimed in one of claims 2 and 3, characterised in that each longitudinal frame beam (2, 3), including both its portions (2/1, 2/2 and 3/1, 3/2 respectively), is made from a welded structure comprising a plurality of prefabricated component parts.

7. A heavy goods vehicle as claimed in one or more of the preceding claims, characterised in that both portions (2/1, 2/2 and 3/1, 3/2 respectively) of each longitudinal frame beam (2, 3) are joined to each other at their rear end by a vertical cross-arm (11).

8. A heavy goods vehicle as claimed in one or more of claims 1 to 7, characterised in that the lower portion (2/2, 3/2) of one of the two longitudinal frame beams (2, 3) is placed so low that between the latter and the associated upper longitudinal beam portion (2/1, 3/1) it is possible to insert a spare wheel (16) crosswise.

9. A heavy goods vehicle as claimed in one or more of claims 1 to 7, characterised in that the two portions (2/1, 2/2 and 3/1, 3/2 respectively) of a longitudinal frame beam (2, 3) are connected to each other by at least one reinforcing stanchion (21).

10. A heavy goods vehicle as claimed in claim 9, characterised in that the two portions (2/1, 2/2 and 3/1, 3/2 respectively) of a longitudinal frame beam (2, 3), including the stanchion(s) (21), are made as a one-piece pressed sheet steel part.

11. A heavy goods vehicle as claimed in claim 3, characterised in that the lower portion (2/2, 3/2) of each longitudinal frame beam (2, 3) extends with a flat upper edge at a lowered height level (H4) from below the cab (5) rearwards to forward of the (first, forward) rear axle (9) and, immediately or at a slight distance thereabove at a higher level (H5), there extends the upper portion (2/1, 3/1) of the longitudinal frame beam (2, 3), which starts in the region of the rear wall (8) of the cab and ends in the same vertical transverse plane as the associated lower portion (21/2, 3/2).

12. A heavy goods vehicle as claimed in one or more of the preceding claims, characterised in that, on the tail end (34) of the chassis on the front face of the portions (2/4, 3/4) associated with the rearward frame end, there is or are provided a connecting plate (38) or connecting flanges (39, 40) by means of which the pre-assembled tail end (16) of the chassis at the end of the longitudinal beam portions (2/1, 2/2; 3/1, 3/2) can be connected there to the vertical cross-arm (11) or connecting flanges (10).

13. A heavy goods vehicle as claimed in claim 1, characterised in that the two portions (2/1, 2/2 and 3/1, 3/2 respectively) of each longitudinal frame beam (2, 3) have different cross-sections.

14. A heavy goods vehicle as claimed in claim 1, characterised in that the portion having the larger cross-section (2/1, 2/2 and 3/1, 3/2 respectively) of each longitudinal frame beam (2, 3) may optionally be the upper or lower one.

15. A heavy goods vehicle as claimed in claim 1, characterised in that both portions (2/1, 2/2 and 3/1, 3/2 respectively) of each longitudinal frame beam (2, 3) have the same cross-section.

16. A heavy goods vehicle as claimed in one or more of the preceding claims, characterised in that the respective upper portions (2/1, 3/1) and the respective lower portions (2/2, 3/2) of the two longitudinal frame beams (2, 3) are each connected to each other by means of at least one but preferably a plurality of cross-beams (22, 23).

17. A heavy goods vehicle as claimed in claim 16, characterised in that two cross-beams (22, 23) positioned respectively above each other are connected to each other centrally either directly or by means of an intermediate member (24).

18. A heavy goods vehicle as claimed in claim 16, characterised in that two cross-beams (22, 23) positioned respectively above each other, together with cross-members (25) connecting them, are made from one pressed sheet steel part.

19. A heavy goods vehicle as claimed in one or more of claims 1 to 10, characterised in that, to both portions (2/1, 2/2 and 3/1, 3/2 respectively) of a longitudinal frame beam (2, 3), there are fitted, preferably fastened with screws, on the outside with their vertical limbs (19/1) angular supports (19) which are used as carriers for vehicle parts (20) such as fuel and/or compressed air tanks, battery cases, stowage boxes and the like.

20. A heavy goods vehicle as claimed in one or more of claims 1 to 10, characterised in that, to both portions (2/1, 2/2 and 3/1, 3/2 respectively) of the longitudinal frame beams (2, 3), there are fitted supports (27, 28, 29) holding side plates (26) preventing other vehicles from entering the clearance under the heavy good vehicle.

21. A heavy goods vehicle as claimed in claim 20, characterised in that the side plates preventing other vehicles from entering the clearance under said heavy goods vehicle (26) are supported on the supports (27, 28, 29) by transversely yielding energy absorbers (30, 31, 32).

22. A heavy goods vehicle as claimed in one of the preceding claims, characterised in that the longitudinal beam portions (2/4, 3/4) provided in the chassis tail end module (34) are turned downwards to the height (H3) of a car bumper, and in that a strip providing protection against ramming (49) or a sheathing surround (47) aerodynamically disposed around the tail end is supported on the rear ends of the down-turned longitudinal beam portions (2/5, 3/5) by means of at least one energy absorber (48) which is yielding in a longitudinal direction so that, in the event of a car colliding, the latter can enter the thus formed rear heavy goods vehicle crumple zone and the impact energy can be dissipated in the process by the energy absorber(s) (48).

## Revendications

1. Camion notamment à cabine avancée ayant un châssis composé de plusieurs modules pré-assemblés et préfabriqués, et dont le cadre (1) se compose de deux longerons (2, 3) reliés par des traverses (22, 23) et qui au niveau d'un segment de longeron (2/3, 3/3), donné, pour un module avant, sont reliés à au moins un essieu avant (15) et portent le groupe d'entraînement (4) ainsi qu'une cabine de conducteur (5) et au niveau d'un module arrière ou d'un arrière de châssis (34) portent des segments de longeron (2/4, 3/4) avec une longueur différente adaptée aux applications respectives, ainsi qu'avec au moins un essieu arrière (9) et différents composants et les extrémités arrière du segment de cadre ainsi données sont reliées par des organes de raccordement appropriés (10, 11),
caractérisé en ce que
a) chacun des deux longerons de châssis (2, 3) est décomposé sensiblement au niveau de la paroi arrière (8) de la cabine de conducteur en une partie supérieure de longeron (2/1, 3/1) et une partie inférieure de longeron (2/2, 3/2), et ces parties s'étendent vers l'arrière seulement jusque devant le premier essieu arrière ou essieu arrière avant (9), pour y être reliées en extrémité avec des organes de raccordement pour la fixation de la partie arrière (34) du châssis sous la forme de brides (19) ou une traverse verticale (11),
b) l'arrière (34) du châssis est formé par un module à l'intérieur duquel l'extrémité du châssis est adaptée à l'application respective du véhicule à la fois la variation de longueur et de largeur,
c) l'arrière (34) du châssis comporte des segments de longeron (2/4, 3/4) avec des organes de raccordement (38, 39, 40) en forme de plaques prévues à l'avant, et par lesquelles cet arrière est relié en s'y appuyant aux segments de châssis qui se trouvent devant par des organes de raccordement (10, 11).

2. Camion selon la revendication 1,
caractérisé en ce que
chacun des deux longerons (2, 3) comporte à l'extrémité arrière d'un segment de longeron (2/3, 3/3), une fourche verticale (12) avec une partie supérieure de fourche (12/1) à laquelle fait suite la partie supérieure de longeron (2/1, 3/1) et une partie inférieure de fourche (12/2) à laquelle fait suite la partie inférieure de longeron (2/2 ou 3/2).

3. Camion selon la revendication 2,
caractérisé en ce que
la fourche verticale (12) est prévue chaque fois à l'extrémité arrière d'un segment avant de longeron (2/3, 3/3), abaissé au moins partiellement à un niveau (H4 = environ à 0,6-0,9 H5) par rapport au niveau (H5) de la partie supérieure de longeron (2/1, 3/1) pour abaisser le groupe d'entraînement (4) et le cas échéant également la cabine de conducteur (5), et le cas échéant pour former une zone de montage du groupe d'entraînement, sensiblement en forme de V en biais par rapport à la direction verticale et pour le branchement direct des organes d'articulation d'essieu ou de suspension de roues indépendantes avec des cavités ou des réservations correspondantes.

4. Camion selon la revendication 2,
caractérisé en ce que
les deux parties (2/1, 2/2 ou 3/1, 3/2) de chaque longeron (2, 3) sont superposées à distance dans un plan vertical et sont essentiellement parallèles dans la direction longitudinale.

5. Camion selon la revendication 2,
caractérisé en ce que
chacune des deux parties (2/1, 2/2 ou 3/1, 3/2) d'un longeron de châssis (2, 3) est reliée à la partie de fourche (12/1, 12/2) correspondante par des liaisons à vis ou à rivets.

6. Camion selon l'une des revendications 2 et 3,
caractérisé en ce que
chaque longeron de châssis (2, 3) y compris ses deux parties (2/1, 2/2 ou 3/1, 3/2) est réalisé par une construction soudée composée de plusieurs pièces distinctes préfabriquées.

7. Camion selon une ou plusieurs des revendications précédentes,
caractérisé en ce que
les deux parties (2/1, 2/2 ou 3/1, 3/2) de chaque longeron de châssis (2, 3) sont reliées à leur extrémité arrière par une traverse verticale (11).

8. Camion selon une quelconque des revendications 1 à 7,
caractérisé en ce que
la partie inférieure (2/2, 3/2) de l'un des deux longerons (2, 3) est abaissée jusqu'à ce qu'entre celui-ci et la partie de longeron (2/1, 3/1) supérieure correspondante on puisse insérer une roue de secours (16).

9. Camion selon une ou plusieurs des revendications 1 à 7,
caractérisé en ce que
les deux parties (2/1, 2/2 ou 3/1, 3/2) d'un longeron de châssis (2, 3) sont reliées par au moins une traverse de rigidification (21).

10. Camion selon la revendication 9,
caractérisé en ce que
les deux parties (2/1, 2/2 ou 3/1, 3/2) d'un longeron (2, 3) y compris du ou des entretoises (21) sont réalisées en un seul morceau sous la forme d'une pièce matricée.

11. Camion selon la revendication 3,
caractérisé en ce que
la partie inférieure (2/2, 3/2) de chaque longeron de châssis (2, 3) se trouve avec son bord supérieur plan à un niveau (H4) abaissé en dessous de la cabine de conducteur (5), vers l'arrière jusque devant le premier essieu arrière (9) et directement ou à une faible distance au-dessus, à un niveau supérieur (H5) se trouve la partie supérieure (2/1, 3/1) du longeron de châssis (2, 3), qui commence au niveau de la paroi arrière (8) de la cabine de conducteur et se termine dans le même plan vertical que la partie inférieure (21/2, 3/2) correspondante.

12. Camion selon une ou plusieurs des revendications précédentes,
caractérisé en ce que
l'arrière du châssis (34) comporte frontalement à la partie correspondante de l'extrémité arrière de châssis (2/4, 3/4), une plaque de raccordement (38) ou une bride de raccordement (39, 40) par laquelle la partie arrière préassemblée (16) du châssis se raccorde à l'extrémité des parties de longeron (2/1, 2/2 ; 3/1, 3/2) à la traverse verticale (11) ou aux brides de raccordement (12) qui s'y trouvent.

13. Camion selon la revendication 1,
caractérisé en ce que
les deux parties (2/1, 2/2 ou 3/1, 3/2) de chaque longeron de châssis (2, 3) ont des sections différentes.

14. Camion selon la revendication 1,
caractérisé en ce que
la partie de section la plus forte 1, (2/1, 2/2 ou 3/1, 3/2) de chaque longeron de châssis (2, 3) est au choix la partie supérieure ou la partie inférieure.

15. Camion selon la revendication 1,
caractérisé en ce que
les deux parties (2/1, 2/2 ou 3/1, 3/2) de chaque longeron de châssis (2, 3) ont la même section.

16. Camion selon une ou plusieurs des revendications précédentes,
caractérisé en ce que
chaque fois les parties supérieures (2/1, 3/1) et les parties inférieures respectives (2/2, 3/2) des deux longerons (2, 3) du châssis sont reliées par au moins une traverse (22, 23) et de préférence par plusieurs traverses.

17. Camion selon la revendication 16,
caractérisé en ce que
chaque fois deux traverses (22, 23) superposées sont reliées au milieu d'elles directement ou par une pièce intermédiaire (24).

18. Camion selon la revendication 16,
caractérisé en ce que
chaque fois deux traverses (22, 23) superposées et les entretoises (25) qui les relient sont réalisées sous la forme d'une pièce en tôle matricée.

19. Camion selon une ou plusieurs des revendications 1 à 10,
caractérisé en ce que
les deux parties (2/1, 2/2 ou 3/1, 3/2) de chaque longeron de châssis (2, 3) portent en plus des cornières (19) fixées par leurs branches verticales (19/1) de préférence par vissage, les composants tels que les supports de pièces de véhicule (20) tels que le réservoir de carburant et/ou d'air comprimé, le caisson à batterie, le caisson de rangement ou des moyens analogues.

20. Camion selon une ou plusieurs des revendications 1 à 10,
caractérisé en ce que
les deux parties (2/1, 2/2 ou 3/1, 3/2) des longerons de châssis (2, 3) portent des supports (27, 28, 29) munis de panneaux de protection contre l'encastrement (26).

21. Camion selon la revendication 20,
caractérisé en ce que
les panneaux latéraux (26) de protection contre l'encastrement sont soutenus par des absorbeurs d'énergie (30, 31, 32) souples transversalement aux supports (27, 28, 29).

22. Camion selon une ou plusieurs des revendications précédentes,
caractérisé en ce que
les segments de longerons (2/4, 3/4) pour le module arrière (34) du véhicule sont abaissés jusqu'à la hauteur (H3) d'un pare-chocs de véhicule de tourisme et en ce qu'un longeron de protection contre les chocs (49) ou un habillage (47) habillant de manière aérodynamique, l'arrière, sont appuyés par au moins un absorbeur d'énergie (48) cédant dans la direction longitudinale aux extrémités arrière des segments de longeron (2/5, 3/5) abaissés, pour qu'ainsi en cas de collision d'un véhicule de tourisme, celui-ci puisse pénétrer dans la zone d'écrasement de véhicule de tourisme, arrière, comme prévu, pour dissiper l'énergie de collision accumulée par l'absorbeur d'énergie (48).
